Europäisches Patentamt

European Patent Office

Office européen des brevets

(19)

(11) Numéro de publication : **0 462 936 A1**

# (12) DEMANDE DE BREVET EUROPEEN

(21) Numéro de dépôt : **91810486.0**

(51) Int. Cl.$^5$ : **G02C 5/22**

(22) Date de dépôt : **21.06.91**

(30) Priorité : **21.06.90 CH 2078/90**

(43) Date de publication de la demande :
**27.12.91 Bulletin 91/52**

(84) Etats contractants désignés :
**AT DE ES FR GB IT**

(71) Demandeur : **LN INDUSTRIES S.A.**
**2, Rue des Falaises**
**CH-1205 Genève (CH)**

(72) Inventeur : **Gerbet, André**
**3, avenue Jean Jaures**
**F-39300 Champagnole (FR)**

(74) Mandataire : **Ardin, Pierre**
**PIERRE ARDIN & CIE, Case Postale 1091**
**CH-1211 Genève1 (CH)**

(54) **Charnière à ressort pour monture de lunettes.**

(57)  La charnière de lunettes permettant l'articulation de la branche (2) sur la partie face (1) d'une monture de lunettes comprend deux ressorts (8) indépendants disposés côte à côte et agissant en traction sur le pivot (14) dans des plans sensiblement perpendiculaire à l'axe de ce pivot (14). Les charnons (8) sont engagés entre les charnons (12). Cette disposition permet la réalisation de charnières plus robustes et plus plates que jusqu'à présent.

FIG. 2

EP 0 462 936 A1

On connaît déjà des charnières à ressort à au moins trois charnons pour monture de lunettes, comprenant deux parties destinées à être respectivement fixées à la partie face de la monture et à une branche de la monture, une desdites parties présentant au moins un charnon venant s'introduire entre les charnons de l'autre partie, un perçage permettant le passage d'un pivot traversant lesdits charnons pour permettre l'articulation entre les deux parties, deux ressorts parallèles entre eux agissant sur les deux parties pour exercer une action de rappel lorsque la branche est amenée au-delà de sa position déployée. Des charnières de ce genre sont décrites, par exemple dans la demande de brevet allemand N° 29 48 113.

L'invention a pour but de permettre la réalisation de charnières de ce genre, robustes, peu épaisses et à rattrapage automatique des jeux. A cet effet, la charnière selon l'invention est caractérisée en ce que les charnons d'une des parties sont mobiles par rapport à la partie qui les porte et sont indépendants les uns de autres, chacun étant soumis à l'action d'un ressort de traction le rappelant dans une position déterminée.

Les dessins annexés représentent schématiquement et à titre d'exemple une forme d'exécutioin d'une charnière selon l'invention.

La figure 1 est une vue en coupe de la première forme d'exécution.

La figure 2 est une vue latérale du côté intérieur de la branche.

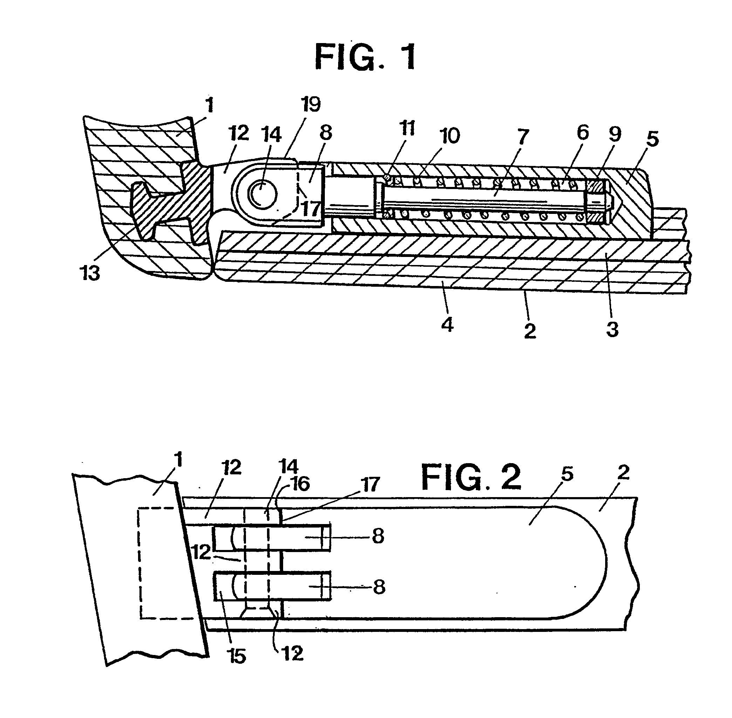

En référence aux figures 1 et 2, la charnière est représentée montée sur une monture de lunettes dont on voit une portion de la partie face 1 et l'extrémité avant d'une branche 2 comprenant une armature métallique 3 enrobée de la résine synthétique 4. Sur l'armature 3 est soudé un boîtier 5 présentant deux perçages parallèles dont un seul 6 est visible à la figure 1. Dans chacun de ces deux perçages est logé un ressort indépendant de l'autre, comprenant une tige 7 dont une extrémité forme un charnon 8 et dont l'autre extrémité porte un collier 9 coulissant dans le perçage 6 et servant d'appui à une extrémité d'un ressort à boudin 10. L'autre extrémité de ce ressort 10 s'appuie contre une butée 11 qui est solidaire du boîtier 5. Cet ensemble constitue la première partie de la charnière.

La seconde partie de la charnière comprend des charnons 12 solidaires d'un pied 13 noyé dans la partie face 1 de la monture. Les charnons 8 et 12 présentent des perçages pour le passage d'un pivot 14 constituant un axe d'articulation entre ces charnons.

Comme le montre la figure 2, des encoches 15 sont ménagées entre les charnons 12 pour recevoir chacune un charnon 8. Sous l'action des ressorts 10, les charnons 12 sont tirés en direction du boîtier 5 et présentent des faces planes 16 qui viennent prendre appui contre des faces 17 du boîtier 5 qui sont également comprises entre les charnons 8, définissant ainsi la position déployée de la branche lorsque les branches sont repliées. Ces mêmes faces 17 viennent prendre apppui contre une partie 19 des charnons 12 pour maintenir élastiquement les branches dans leur position repliée.

En référence à la figure 2, on voit que l'action de rappel exercée par les éléments élastiques agit en deux points distincts du pivot 14, ce qui s'oppose à tout jeu de la branche par rapport à la partie face de la monture dans le sens vertical. De plus, comme l'action de rappel élastique est exercée par deux ressorts disposés côte à côte, ces ressorts peuvent être plus petits que dans le cas d'une charnière habituelle où la force de rappel n'est exercée que par un seul ressort, de sorte que les ressorts 10 peuvent avoir un plus petit diamètre et que le boîtier 5 peut donc avoir une plus faible épaisseur.

Il va de soi que l'on peut prévoir de nombreuses variantes d'exécution et que notamment on pourrait avoir plus de deux ressorts travaillant en parallèle. Les ressorts ne doivent pas nécessairement être disposés du côté de la branche, mais pourrait faire partie du charnon fixé à la partie face de la monture, par exemple de la façon décrite dans le brevet suisse N° 639.498.

De toute façon, la forme d'exécution décrite convient particulièrement bien aux montures dont les branches sont larges, c'est-à-dire qui présentent une hauteur transversale nettement plus grande que leur épaisseur. Toutefois, les dispositions décrites peuvent évidemment être adaptées pour être utilisées dans le cas des branches dont la section, à proximité de la charnière, est sensiblement carrée.

Dans la forme d'exécution décrite, les deux parties de la charnière présentent ensemble cinq charnons 8 et 12, mais il est clair que l'on pourrait réaliser une charnière à trois charnons, un seul charnon 12 étant engagé entre deux charnons 8.

Les charnons 8 ont été montés coulissants par rapport au boîtier 5, mais en fait il suffirait qu'ils soient mobiles par rapport à ce boîtier, par exemple par pivotement selon un axe sensiblement parallèle au pivot 14.

**Revendications**

1. Charnière à ressort à au moins trois charnons pour monture de lunettes, comprenant deux parties destinées à être respectivement fixées à la partie face de la monture et à une branche de la monture, une desdites parties présentant au moins un charnon venant s'introduire entre les charnons de l'autre partie, un perçage permettant le passage d'un pivot traversant lesdits charnons pour permettre l'articulation entre les deux parties, deux ressorts parallèles entre eux agissant sur les deux parties pour exercer une action de rappel lorsque la branche est amenée au-delà de sa position déployée, **caractérisée** en ce que les charnons d'une des parties sont mobiles par rapport à la partie qui les porte et sont indépendants les uns des autres, chacun étant soumis à l'action d'un ressort de traction le rappelant dans une position déterminée.

2. Charnière selon la revendication 1, **caractérisée** en ce que les deux parties présentent sur leurs portions venant en regard l'une de l'autre des surfaces planes conformées pour pouvoir prendre appui les unes contre les autres, la traction exercée sur les charnons par lesdits ressorts ayant pour effet d'appliquer au moins une surface plane d'une des parties contre celle de l'autre.

3. Charnière selon la revendication 2, **caractérisée** en ce que la surface plane d'une partie de la charnière fait partie d'une portion formant came pour définir une position déployée et une position repliée de la branche.

4. Charnière selon l'une des revendications 1 à 3, **caractérisée** en ce que les ressorts sont portés par la partie de charnière destinée à être fixée à la branche.

5. Charnière selon la revendication 2, **caractérisée** en ce que les ressorts sont logés dans un boîtier destiné à être rendu solidaire de l'extrémité avant de la branche.

# FIG. 1

# FIG. 2

EP 0 462 936 A1

Office européen
des brevets

**RAPPORT DE RECHERCHE EUROPEENNE**

Numero de la demande

EP 91 81 0486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | DE-A-2 948 113 (Fa. F. MENRAD)<br>* Pages 3-4; figures 1,2 *<br>--- | 1-5 | G 02 C 5/22 |
| A | FR-A-2 097 211 (R. GIROD)<br>* Revendications *<br>--- | 1-5 | |
| A | DE-A-3 107 842 (Fa. F. MENRAD)<br>* Pages 9-10 *<br>--- | 1-5 | |
| A | FR-A-1 183 993 (F.I.O.C.)<br>* Résumé *<br>--- | 1-5 | |
| A | EP-A-0 340 161 (LN INDUSTRIES)<br>* Abrégé; figure 5 *<br>--- | 1-5 | |
| A | EP-A-0 306 446 (LN INDUSTRIES)<br>--- | | |
| A | EP-A-0 266 307 (LN INDUSTRIES)<br>----- | | |

| | DOMAINES TECHNIQUES RECHERCHES (Int. Cl.5) |
|---|---|
| | G 02 C 5/22 |

Le présent rapport a été établi pour toutes les revendications

| Lieu de la recherche | Date d'achèvement de la recherche | Examinateur |
|---|---|---|
| LA HAYE | 29-08-1991 | CALLEWAERT-HAEZEBROUCK H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0403)

5